# EUROPEAN PATENT SPECIFICATION

(11) **EP 0 360 172 B1**
(45) Date of publication and mention of the grant of the patent: **06.12.1995**
(21) Application number: 89117147.2
(22) Date of filing: 15.09.1989
(51) Int. Cl.: B29C 44/00, F16B 17/00, B29C 70/00

(54) **Method for joining two casing parts elastically to each other and the joint produced by the method**
Verfahren zum elastischen Verbinden von zwei Gehäuseteilen und die so hergestellte Verbindung
Procédé pour joindre élastiquement deux parties de caisses et joint obtenu par ce procédé

(30) Priority: 19.09.1988 FI 884295
(43) Date of publication of application: 28.03.1990
(73) Proprietor: SALORA OY, SF-241 00 Salo (FI)
(72) Inventor: Väisänen, Vesa Henrik, SF-24100 Salo (FI); Hyvönen, Jaakko Tapani, SF-20720 Turku (FI)
(74) Representative: Strehl Schübel-Hopf Groening & Partner

(56) References cited:
- EP-A- 0 043 995
- WO-A-84/03659
- DE-B- 2 738 526
- US-A- 4 177 933

## Description

The present invention is related to a method for joining two casing parts elastically to each other, the first part comprising a protruding edge, which is attached to a corresponding groove in the other part.

The preambles of claims 1 and 3 are based on EP-A-0 043 995.

WO 84/03659 shows a lid or door provided with a seal made by moulding resin. The known seal is moulded to a door panel prior to its assembly and merely serves to accomplish a seal function between the door and a freezer cabinet.

The object of the present invention is a method for joining two casing parts elastically to each other, the first part comprising a protruding edge which is attached to a corresponding groove in the other part. The invention also relates to the joint produced by the method.

Although the invention generally relates to an elastic joint between two casing parts, the aim of the joint according to the invention is particularly to elastically attach a fairly light part, e.g. a panel of a casing, to a heavier, stationary part. As one example we can mention the joining of a front panel to a loudspeaker casing.

It is generally known to use soft sealing bands and tapes for this kind of purposes, which, however, usually need a separate mechanical locking, which can be achieved by screws, bendable tongues or the like.

A drawback of the prior known methods is that their automatization is not easy and, moreover, they need a lot of handwork. Another drawback is that a relatively high dimensional accuracy is required in them and, furthermore, there are a great number of parts in them. Nevertheless, the prior known methods do not work as desired, i.e. the joining is unsafe or the elasticity of the joining unsatisfactory.

A purpose of the present invention is to remove the above-mentioned problems and achieve a method which makes a fairly simple joint, which can easily be automated, and which, moreover comprises very few parts and the requirements of which with respect to dimensional accuracy are quite reasonable.

Characterizing of the method according to the invention in trying to reach these purposes is what has been presented in claim 1. The characteristics of the joint according to the invention are respectively disclosed by claim 3.

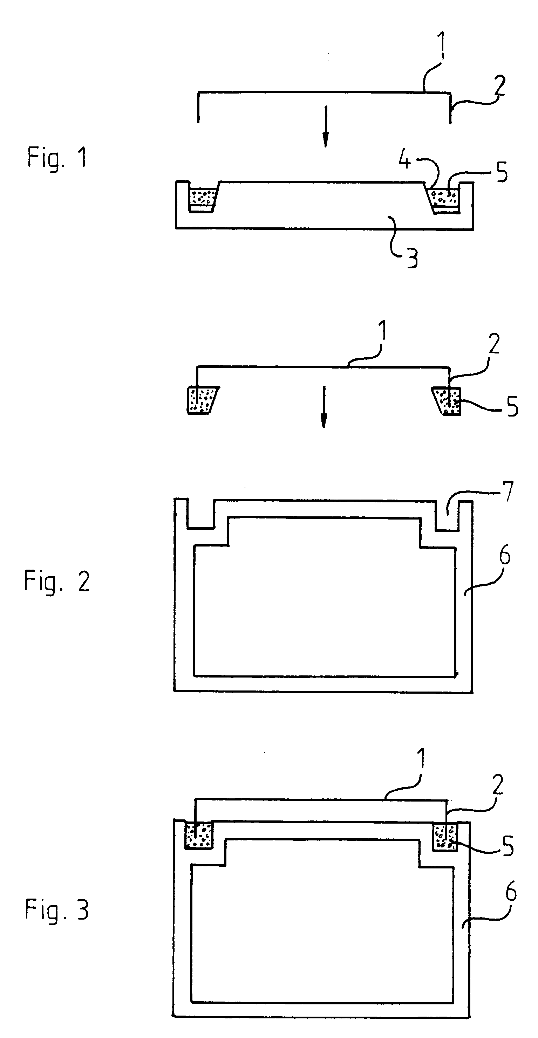

The invention and its further advantages are described more closely as an example and referrring to the enclosed drawing, in which
fig. 1 depicts schematically the starting stage of the invention seen from the side, fig. 2 depicts the second stage of the joining method, and fig. 3 depicts two casing parts elastically attached to each other by the method according to the invention.

In the example of the drawing it has been imagined that the first casing part 1 is a fairly light front panel, while the other heavier part 6 is a stationary part, e.g. a loudspeaker casing.

The panel 1 forming the first casing part is in practice a rectangular, but in the figures only its cross section has been presented. Around its frame extends an edge 2 directed perpendicularly towards the plane of panel 1, by means of which edge the panel is attached to another casing part.

In fig. 1 a mould frame has been indicated by reference numeral 3 having a cavity 4 corresponding to the shape of the frame of panel 1. As shown by the figure the inner edge of the cavity 4 is a little inclined, so as to make the cavity upwards widening.

According to the invention plastic foam in liquid form is first moulded into the cavity 4. This foam can be e.g. two-component polyurethane foam. When the plastic foam still is in molten state the edge 2 of the panel 1 is sunk in the cavity 4 so that the edge 2 does not quite reach the bottom of the cavity. After this the panel 1 is maintained on its seat with respect to the mould 3 for so long that the plastic foam 5 has time to solidify and form a list-like formation at the edge 2. When the plastic foam has solidified, panel 1 with its plastic foam list 5 is lifted up from the mould 3. If necessary, various kinds of means, such as lubricant, can be used to facilitate the detachment of the list 5 from the cavity 4.

Finally, panel 1 with the plastic foam list is brought into groove 7 of the casing part 6 below, as is illustrated in fig. 2. The groove 7 in the casing part 6 is a little narrower than the list 5 and does not have any sloping.

When the list 5 is pressed with force inside the groove 7, the edge 2 is fixed in groove 7 thanks to the elasticity of the list 5 and the friction force. The joined casing parts 1 and 6 have been presented in the end position in fig. 3.

It is clear that the forms of the casing parts can vary very much without deviating from the idea of the invention. The profiles of the list 5 and the groove 7 can differ completely from those presented in the examples of the figures. The two-component polyurethane foam has been stated as one possible plastic foam only.

## Claims

1. Method for joining two casing parts (1, 6) elastically to each other, the first casing part (1) comprising a protruding edge (2) which fits into a corresponding groove (7) in the second casing part (6),
**characterized** in providing a mould (3) having a cavity (4) corresponding to the form of the groove (7) and being of such a dimension that a plastic foamed list (5) moulded by performing the steps of bringing in the cavity of the mould plastic foam (5) in liquid state , placing the first casing part (1) with its edge (2) into the plastic foam, and allowing the foam to solidify and fix the edge, fits into the groove and is kept there solely by the frictional force between the plastic foam and the side of the groove (7) after the casing part (1) being detached with its list-like plastic foam from the mould and being attached to the second casing part (6) by urging the elastical plastic foam list (5) into the groove (7).

2. Method according to Claim 1, **characterized** in that the cavity (4) of the mould (3) is formed as a little greater in width than the corresponding groove (7) in the other casing part (6).

3. An elastic joint between two casing parts (1, 6), the first casing part (1) comprising a protruding edge (2) which fits into a corresponding groove (7) in the second casing part (6),
**characterized** in that on the edge (2) is moulded a plastic foamed list (5) of such a dimension that the list (5) fits into the groove and is kept there solely by the frictional force between the plastic foam and the side of the groove (7).

4. Joint according to claim 3, **characterized** in that the width of the plastic foam list (5) somewhat exceeds (he width of the groove (7).

5. Joint according to claim 3, **characterized** in that the plastic foam (5) is a two-component polyurethane foam.

## Patentansprüche

1. Verfahren zum elastischen Verbinden von zwei Gehäuseteilen (1, 6), wobei das erste Gehäuseteil (1) einen vorstehenden Rand (2) aufweist, der in eine entsprechende Nut (7) im zweiten Gehäuseteil (6) paßt, dadurch **gekennzeichnet**, daß eine Form (3) mit einer Vertiefung (4) vorgesehen wird, die der Form der Nut (7) entspricht und die solche Abmessungen hat, daß durch Ausführen der Schritte des Einbringens von Kunststoffschaum (5) in flüssigem Zustand in die Vertiefung der Form, des Plazierens des ersten Gehäuseteils (1) mit seinem Rand (2) im Kunststoffschaum und des Verfestigenlassens des Schaums zum Befestigen des Randes eine Kunststoffschaumleiste (5) gebildet wird, die in die Nut paßt und die dort allein durch die Reibung zwischen dem Kunststoffschaum und den Seiten der Nut (7) gehalten wird, nachdem das Gehäuseteil (1) mit seiner Kunststoffschaumleiste aus der Form genommen und durch Eindrücken der elastischen Kunststoffschaumleiste (5) in die Nut (7) am zweiten Gehäuseteil (6) angebracht wurde.

2. Verfahren nach Anspruch 1, dadurch gekennzeichnet, daß die Vertiefung (4) in der Form (3) eine etwas größere Breite hat als die entsprechende Nut (7) im anderen Gehäuseteil (6).

3. Elastische Verbindung zwischen zwei Gehäuseteilen (1, 6), wobei das erste Gehäuseteil (1) einen vorstehenden Rand (2) aufweist, der in eine entsprechende Nut (7) im zweiten Gehäuseteil (6) paßt, dadurch **gekennzeichnet**, daß am Rand (2) eine Kunststoffschaumleiste (5) mit solchen Abmessungen angeformt ist, daß die Leiste (5) in die Nut paßt und dort allein durch die Reibung zwischen dem Kunststoffschaum und den Seiten der Nut (7) gehalten wird.

4. Verbindung nach Anspruch 3, dadurch gekennzeichnet, daß die Breite der Kunststoffschaumleiste (5) die Breite der Nut (7) etwas übertrifft.

5. Verbindung nach Anspruch 3, dadurch gekennzeichnet, daß der Kunststoffschaum (5) ein Zweikomponenten-Polyurethanschaum ist.

## Revendications

1. Procédé pour joindre élastiquement l'une à l'autre deux parties (1, 6) d'une caisse, la première partie (1) comprenant un bord faisant saillie (2) qui s'adapte dans une gorge (7) correspondante formée dans la seconde partie (6) de la caisse,
caractérisé en ce que l'on utilise un moule (3) ayant une cavité (4) correspondant à la forme de la gorge (7) et ayant une dimension telle qu'une barre de mousse plastique (5), moulée en accomplissant les étapes consistant à mettre une mousse plastique (5) à l'état liquide dans la cavité du moule, à placer la première partie (1) de caisse avec son bord (2) dans la mousse plastique, et à laisser la mousse se solidifier et se fixer sur le bord, s'adapte dans la gorge et y est maintenue uniquement par la force de frottement entre la mousse plastique et la paroi de la gorge (7) après que la partie (1) de caisse ait été détachée du moule avec sa mousse plastique à la forme de la gorge et attachée à la seconde partie (6) de caisse en pressant la barre de mousse plastique élastique (5) dans la gorge (7).

2. Procédé selon la revendication 1, caractérisé en ce que la cavité (4) du moule (3) est formée avec une largeur légèrement supérieure à celle de la gorge correspondante (7) dans l'autre partie de caisse (6).

3. Joint élastique entre deux parties (1, 6) de caisse, la première partie (1) comprenant un bord (2) faisant saillie qui s'adapte dans une gorge correspondante (7) dans la seconde partie (6) de caisse,
caractérisé en ce que, sur le bord (2), est moulée une barre (5) de mousse plastique de dimension telle que la barre (5) s'adapte dans la gorge et y soit maintenue uniquement par la force de frottement entre la mousse plastique et la paroi de la gorge (7).

4. Joint selon la revendication 3, caractérisé en ce que la largeur de la barre de mousse plastique (5) excède quelque peu la largeur de la gorge (7).

5. Joint selon la revendication 3, caractérisé en ce que la mousse plastique (5) est une mousse à deux composants polyuréthanne.
